Europäisches Patentamt

European Patent Office

Office européen des brevets

(19)

(11) Veröffentlichungsnummer: **0 495 336 B1**

(12) # EUROPÄISCHE PATENTSCHRIFT

(45) Veröffentlichungstag der Patentschrift: **15.02.95**

(21) Anmeldenummer: **91810788.9**

(22) Anmeldetag: **14.10.91**

(51) Int. Cl.⁶: **C04B 28/26**, C04B 28/00, E21D 20/02, //(C04B28/26, 14:06,14:10,22:06,22:10,24:06)

(54) **Verwendung von in Gegenwart von Wasser abbindende Massen zur Befestigung von Ankerstangen.**

(30) Priorität: **09.01.91 DE 4100386**

(43) Veröffentlichungstag der Anmeldung:
**22.07.92 Patentblatt 92/30**

(45) Bekanntmachung des Hinweises auf die Patenterteilung:
**15.02.95 Patentblatt 95/07**

(84) Benannte Vertragsstaaten:
**CH DE FR IT LI**

(56) Entgegenhaltungen:
EP-A- 0 324 968     EP-A- 0 455 582
WO-A-89/02878      DE-A- 3 246 602
JP-A-57 063 370     US-A- 4 642 137
ZA-A- 8 802 627

CHEMICAL ABSTRACTS, vol. 111, no. 12, Columbus, Ohio, US; abstract no.102019R, *Zusammenfassung*

CHEMICAL ABSTRACTS, vol. 97, no. 12, 20. September 1982, Columbus, Ohio, US;abstract no. 97294N, *Zusammenfassung*

(73) Patentinhaber: **HILTI Aktiengesellschaft**

**FL-9494 Schaan (LI)**

(72) Erfinder: **Hense, Ulrich, Dr.**
**Römerauterrasse 18**
**W-8910 Landsberg/Lech (DE)**
Erfinder: **Mauthe, Peter**
**Herbert-Kessel-Strasse 8**
**W-8939 Türkheim (DE)**
Erfinder: **Hinterwaldner, Rudolf**
**Kastanienstrasse 13**
**W-8000 München 90 (DE)**

(74) Vertreter: **Wildi, Roland et al**
**Hilti Aktiengesellschaft**
**Patentabteilung**
**FL-9494 Schaan (LI)**

**Beschreibung**

Die Erfindung betrifft die Verwendung von mit Wasser oder wässrigen Lösungen, auch bei tieferen Temperaturen, schnell abbindende Formmassen auf anorganischer Grundlage für Befestigungszwecke.

Aus der US-PS 4,842,649 (= WO 88/00156) sind hydraulisch abbindende Zementmischungen bekannt, die auch bei Temperaturen unter dem Gefrierpunkt erstarren und erhärten. Diese Mischungen bestehen aus Portlandzementen, Flugaschen, Metakaolinit und anderen Zuschlagstoffen. Die damit hergestellten Massen binden im Vergleich Zu konventionellen Massen relativ schneller ab und erreichen nach wenigen Stunden eine relativ hohe Grünfestigkeit.

Ueberträgt man diese Erkenntnisse auf Massen, die in kleinen Mengen verarbeitet werden, zeigt sich, dass die Vorteile nicht erkennbar und wirksam werden. Das Bauwesen sucht seit langem nach Massen, die auch in kleinen Ansatzmengen, insbesondere bei tiefen Temperaturen noch schneller erstarren und härten, sowie hohe Grün- und Endfestigkeit liefern. Solche anorganischen Massen können dann die auf organischer Harzbasis unter Polymerbeton bekannt gewordenen Massen substituieren und dadurch zusätzlich einen Beitrag zum Umweltschutz und zur Arbeitshygiene leisten.

Aus der WO-A-89/02878 sind hydraulisch abbindende Massen aus Portlandzement, Flugasche, Metakaolin, Kaliumcarbonat und gegebenenfalls weiteren Zusätzen bekannt zur schnellen Härtung bei warmem und auch bei kaltem Wetter. Ebenso sind aus der US-A-4,642,137 Bindemittel für Portlandzement aus Metakaolin, Flugasche, Schlacke, amorphem $SiO_2$, Kaliumsilikat, teilweise ersetzbar durch Kaliumhydroxid zur beschleunigten Härtung bekannt.

Der Erfindung liegt demzufolge vor allem die Aufgabe zugrunde, eine Formmasse für Befestigungszwecke zur Verfügung zu stellen, die in hierfür üblichen kleinen Volumina, ohne zusätzliche Energiezufuhr von aussen in kurzer Zeit, insbesondere auch bei tiefen Temperaturen, tatsächlich schnell erstarren und erhärten. Weitere Aufgaben ergeben sich auch aus den nachfolgend ersichtlich werdenden Vorteilen.

Gegenstand der Erfindung ist die Verwendung härtbarer, in Gegenwart von Wasser abbindender 2-Komponentenmassen enthaltend:

A) als anorganisches Bindemittel

a1) feinteiliges $SiO_2$ oder feinteiliges $SiO_2$ und $Al_2O_3$ enthaltende Gemische und

a2) Aluminiumsilikate aus der Gruppe der Kaolinite und Metakaolinite,

B) als Härtungsmittel in wässriger Form vorliegende, zumindest teilweise wasserlösliche Alkali- und/oder Ammoniumsilikate und/oder Precursoren aus den entsprechenden Oxiden bzw. Hydroxiden und amorpher Kieselsäure und

C) die Härtung beschleunigende Substanzen aus der Gruppe Alkali- und/oder Ammoniumcarbonate und/oder anorganische und/oder metallorganische Verbindungen, die beim Kontakt mit Wasser die Härtung mittels Wärmetönung, insbesondere von ≧500 joule/g beschleunigen,

als Dübelmassen zur Befestigung von Ankerstangen in Bohrlöchern.

Die Verwendung von Massen, die aus a1), B) und C) bestehen, sind aus EP-A-0 455 582 (Stand der Technik gemäß Artikel 54(3) EPÜ) bekannt.

Die Dübelmassen können nach einer anderen Ausführungsform weiter

a3) ein hydraulisches Bindemittel enthalten.

Die Bestandteile der Gruppe A bilden die Grundlage für die Rückgratpolymere der erfindungsgemäßen Massen, wobei bevorzugt werden a1) und a2) bzw. a1), a2) und a3).

Ueberwiegt der Bestandteil a3), z.B. Portlandzement, so tragen die Bestandteile a1) und a2) wesentlich zur Modifikation der rheologischen Eigenschaften, der Erstarrungs- und Härtungseigenschaften und zur Verstärkung der Gerüstmatrix bei. Durch diese Kombinationsmöglichkeiten lassen sich Massen herstellen, die nach den Reaktionsmechanismen der hydraulischen Abbindung und/oder Polykondensation erstarren und/oder erhärten können.

Die Bestandteile der Gruppe B wirken im wesentlichen als Härter, wobei sie in Abhängigkeit der Reaktionsmechanismen zumindest teilweise in das Rückgratpolymer eintreten.

Die Bestandteile der Gruppe C sind Additive für die Formmassen, die der Beschleunigung der Erstarrungs- und Härterreaktionen dienen. Weitere Zusätze sind gegebenenfalls mehrbasische organische Carbonsäuren mit mindestens 2 Carboxylgruppen im Molekül bzw. deren Salze als die rheologischen Eigenschaften vor, während und nach der Erstarrung und damit auch den Wasserhaushalt bevorzugt regulierende Zusätze.

Das als Bestandteil a1) vorgesehene $SiO_2$ liegt vorzugsweise in amorpher, insbesondere wasserfreier Form vor. Diese Form ist auch für das feinteilige Gemisch aus $SiO_2$ und $Al_2O_3$ bevorzugt, wenn auch als $Al_2O_3$, zB zum Teil in kristalliner Form vorliegen kann. Das $SiO_2$ kann auch aus der amorphen, wasserhaltigen Kieselsäure stammen, wie sie oft in teilweise löslichen Alkali- und Ammoniumsilikaten enthalten ist.

Die Gewichtsverhältnisse von $SiO_2$ und $Al_2O_3$ im Gemisch liegen vorzugsweise im Bereich von 5 - 80 Gw.-% $SiO_2$ und 95 - 20 Gew.-% $Al_2O_3$. Die Oxide des Bestandteils A) können Verunreinigungen als weitere Bestandteile wie Fe, Na, K usw. in Form ihrer Oxide oder Silikate bzw Aluminiate enthalten. Die Verunreinigungen liegen meist in Mengen von insgesamt weniger als 15 bzw 10 Gew.-%, bezogen auf das Gesamtgemisch des steinbildenden Bestandteils a1) vor. Etwaige merkliche Gehalte an Erdalkalioxiden und/oder -hydroxiden in den steinbildenden Bestandteilen a1), wie z.B in Flugaschen, können dazu beitragen, die Zusatzmengen der Härtungsregulatoren (C) zu reduzieren. Besonders geeignet haben sich Stäube aus Hochtemperaturschmelzprozessen, Filterstäube, Elektrofilterasche aus Hochtemperaturkraftwerken, kalzinierte, gemahlene Bauxite.

In dem Bestandteil a2) liegt das Kaolinit als $Al_2O_3$ . 2 $SiO_2$ . $2H_2O$ und das Metakaolinit (dehydratisiertes Kaolinit) als $Al_2O_3$ . 2 $SiO_2$ vor, wobei auch Uebergangszustände brauchbar sind. Bevorzugt sind die Metakaolinite, da diese eine höhere Reaktivität besitzen.

Bei den Bestandteilen a3) handelt es sich um hydraulische Bindemittel, wobei Portlandzemente bevorzugt sind. Aber auch andere Bindemittel aus dieser Klassen sind geeignet. Beim Einsatz von hydraulischen Bindemitteln, wie zB Portlandzement ist ein Minimumgehalt an Metakaolinit schon deshalb erforderlich, wie überraschenderweise gefunden wurde, um der ausgehärteten Masse eine höhere Haltbarkeit zu verleihen.

Als Härter (B) für die Rückgratbindemittel (A) eignen sich wässrige Lösungen, insbesondere von Alkali- und/oder Ammoniumsilikaten. Als Härter für die Rückgratbindemittel a1) eignen sich besonders Alkali- und/oder Ammoniumsilikate, die allein oder in Abmischungen eingesetzt werden können und im allgemeinen einen Ueberschuss an freiem Alkali und/oder Ammonium besitzen. Die Molverhältnisse zwischen Alkali bzw Ammonium zu Siliziumdioxid liegen im allgemeinen zwischen 1,0 und 5 Mol, vorzugsweise 1,5 bis 4 Mol $SiO_2$ je Mol Alkali bzw. Ammonium. Erfindungsgemäss besonders bevorzugt sind Kali- und/oder Ammoniumwasserglas, weil sie insbesondere in Verbindung mit den nachstehend beschriebenen Additiven nicht nur die Polykondensation beim Abbindeprozess beschleunigen, sondern auch bessere und homogenere physikalische Endeigenschaften liefern. Die Alkali- bzw Ammoniumsilikate können auch in Form wässriger Zubereitungen vorliegen.

Anstelle der Silikate können auch deren Bildungskomponenten, nämlich die entsprechenden Oxide bzw Hydroxide der Alkali bzw des Ammoniums und amorphe, dispers-pulverförmige, wasserhaltige Kieselsäure enthalten sein.

Obwohl beide Reaktionskomnonenten, die Rückgratbindemittel (A) und die Härter (B) hygroskopisch sind, lassen sich damit neben zweikomponentigen auch einkomponentige Formmassensysteme herstellen. Beim Einsatz eines wasser- und wasserdampfundurchlässigen Packmittels zur Trennung von A) und C) einerseits, von B) andererseits können auch gebrauchsfertige Gemische aus Rückgratbindemittel und Beschleuniger (A und C) und Härter (B) hergestellt und abgepackt werden, die über mehrere Monate lagerstabil sind. An der Gebrauchsstelle werden Gemische aus A und aus C und trockenen Alkali- bzw Ammoniumsilikaten mit der entsprechenden Wassermenge angeteigt.

Aber auch als 2-Komponentensystem kann die Formmasse hergestellt und abgepackt werden, wozu für den Härter ein alkali- und/oder wasserbeständiges Behältnis notwendig ist.

Da das Wasser in den polykondensierenden Rückgratbindemittelanteilen in den erfindungsgemässen Formmassensystemen nur Vehikel- und Benetzungsfunktionen besitzt, kann es zusätzlich die Aufgabe und Funktion des Anmachwassers zur Hydratation beim Vorhandensein eines hydraulischen Bindemittelanteils übernehmen um die Abbindung zu initiieren. Dadurch wird zumindest ein Grossteil des Wassers intermediär gebunden, wodurch porenarme bzw porenfreie Formmassen mit höherer Festigkeit nach dem Erhärten entstehen. Aber auch durch den niedrigen Wasser/Bindemittel-Faktor werden kurze Abbindezeiten, vor allem bei tiefen Temperaturen erzielt.

Eine weitere Möglichkeit für einkomponentige Formmassen besteht in der Verwendung eines wasser- und wasserdampfundurchlässigen Packmittels, das die Bestandteile (A) und (C) als pulverförmige Gemische sowie zumindest teilweise lösliche Alkali- und/oder Ammoniumsilikate oder deren Precursoren in ebenfalls fester Form enthält.

Die gemäss vorliegender Erfindung verwendeten Substanzen (C) zur Regulierung und/oder Beschleunigung der Erstarrung und Härtung sind Substanzen

- mit beschleunigenden Eigenschaften und stammen aus der Gruppe der Alkali- und/oder Ammoniumcarbonate und/oder anorganischen und/oder metallorganischen Verbindungen, die beim Kontakt mit Wasser eine die Erstarrungs- und Härtungsreaktion beschleunigende Wirkung ausuben, wobei deren Wärmetönung vorzugsweise $\geq$ 500 joule/g ist.

Geeignete Verbindungen gemäss Bestandteile C) stammen vorzugsweise aus folgenden Gruppen
- Alkali- und Ammoniumcarbonate, insbesondere Lithiumcarbonate

- Gruppe 2 des Periodensystems, wie zB wasserfreie Erdalkali- und Magnesiumoxide. Hierzu gehören u.a. Calcium-, Barium- und Strontiumoxide;
- Klinkerphasen beim Herstellen von Zementen, wozu u.a. das Alit ($C_3S$), das Tricalciumaluminat ($C_3A$) besonders geeignet ist (vgl. Zementliteratur, wobei C = Calciumoxid, S = Siliciumdioxid und A = Aluminiumoxid);
- Ammoniumsilikate und Lithiumsilikate
- Anhydrite
- Metallcarbide der allgemeinen Formel $M^I_2C_2$ oder $M^{II}C_2$, wie zB Calciumcarbid ($CaC_2$), Eisencarbid ($Fe_3C$),
- Metallalkylene der allgemeinen Formel $Mn\,R_n$, wie zB Triisobutylaluminium
- Metallamide, Metallimide und Metallnitride der allgemeinen Formel $MNH_2$; $M_2NH$; $M_3N$, wie zB Natrium- oder Lithiumamid;
- Metallazide der allgemeinen Formel $XN_3$, worin X für Metallkation steht, wie zB Natriumazid;
- organische Azide der allgemeinen Formel $RN_3$, worin R = Alkyl-, Aryl- und/oder Acylreste sind.
- Metallcarbonyle aus der Gruppe ein- und mehrkerniger Koordinationsverbindungen, in denen Kohlenoxid-Moleküle koordininativ an Metallatome angebunden sind, wie zB Dinatriumtetracarbonylferrat.
- Metallhydride, wozu sowohl die stöchimetrischen Metallhydride, zB Hydride der Alkali- und Erdalkalimetalle, die hochpolymeren Hydride, wie zB von Aluminium, Beryllium, Magnesium und die sogenannten komplexen Hydriden, wie zB Alanate, Boranate, gehören.
- Ammoniumnitrate und -nitrite.

Entscheidend für die Eignung einer Verbindung für die Zwecke der vorliegenden Erfindung ist, dass sie beim Kontakt mit Wasser exotherme Reaktionen bzw die steinbildende, reaktionsbeschleunigende Wärmetönung zeigt, insbesondere $\geq$ 500 joule/g liefert.

Die Hydratationswärmen der folgenden Verbindungsbeispiele verdeutlichen es:

| | |
|---|---|
| $C_3S$ | 500 J/g |
| $C_3A$ | 1350 J/g |
| MgO | 850 J/g |
| CaO | 1160 J/g |

Ammoniumnitrat 1571 J/g.

Als die Rheologie beeinflussender Eventual-Bestandteil kommen aliphatische 2- und mehrbasische Carbonsäuren bzw deren Alkali- und/oder Erdalkalisalze infrage, wie zB Zitronensäure. Mit diesen Carbonsäuren können die Fliesseigenschaften bei reduzierten Anmachwasseranteilen, die Mischzeit verkürzt werden und gegebenenfalls die Hydratationsreaktionen beim hydraulisch abbindenden Anteil verzögern.

Ein weiteres kennzeichnendes Merkmal ist, dass bereits bei sehr geringen Mengen an Kaoliniten bzw Metakaoliniten der Anteil an hydraulischen Bindemitteln wesentlich höher sein kann und dann nicht nur Additivfunktionen zur Reaktionsbeschleunigung erfüllt.

Zu den geeigneten hydraulischen Bindemitteln gemäss vorliegender Erfindung gehören u.a. Portland-, Hochofen-, Trass-, Oelschiefer- und Tonerdezemente, aber auch sogen. "hydraulischer Kalk" bzw Puzzolane und dgl.

Beim Einsatz von Bindemittelgemischen aus den Bestandteilen a1), a2) und a3) in den erfindungsgemässen Massen, dh in Gegenwart von polykondensierenden und hydraulisch abbindenden Bestandteilen, hat sich überraschenderweise gezeigt, dass dann der hydraulische Bindemittelanteil besonders schnell erhärtet, wenn die erfindungsgemässen Additive aus der Gruppe der Alkalicarbonate, insbesondere Kalium- und/oder Lithiumsalze der Kohlensäure, Wassergläser, Fluorkieselsäure, Aluminate und/oder Borate in Mengen zwischen 0,05 bis 15,0, vorzugsweise zwischen 0,1 bis 8 Gew.-%, bezogen auf den hydraulischen Bindemittelanteil, enthalten sind.

Des weiteren hat der Bindemittel/Wasser-Faktor Einfluss auf die Endeigenschaften der erfindungsgemässen Massen. Da die Endeigenschaften bei reduziertem Anmachwasseranteil verbessert werden, wodurch das Anmischen und die Rheologie der Massen verschlechtert werden, können geringe Mengen der vorstehenden organischen Säuren zugesetzt werden. Da diese Säuren auch erstarrungsverzögernde Eigenschaften liefern, beträgt die Zusatzmenge meist 0,1 bis 5 Gew.-% - bezogen auf die trockenen Bindemittelanteile der erfindungsgemässen Massen.

Wenngleich die Hydratationswärme beim Mischen eines oder mehrerer der Bestandteile aus der Gruppe A) und B), in Gegenwart von Wasser wesentlich ist, so sind insbesondere in Gegenwart von Additiven der Gruppe C) zusätzlich eine Reihe von synergetischen Effekten beim Erstarren und Erhärten zu beobachten.

Es wurde überraschenderweise gefunden, dass auch dann mit den über die Polykondensation und/oder hydraulisch abbindenden Rückgratbindemitteln eine beschleunigende Polykondensation, Hydratation und/oder Abbindung nach dem Anteigen mit Wasser gegeben ist, wenn die Abbindetemperatur in einem 100 g-Ansatz = 20° C, insbesondere = 10° C, vorzugsweise = 0° C ist. Demgegenüber zeigen Massen, die nur einen Bestandteil aus der Gruppe A) und B) enthalten nur partielles Polykondensations- und Erhärtungsverhalten und sind zum Teil selbst nach Tagen noch weich. Somit lassen sich in Abhängigkeit der Bestandteilauswahl aus a1), a2) und a3) in Verbindung mit dem Härter B) , sowie der Additivauswahl aus C) die Polykondensations-, Hydratations-, Erstarrungs- und Erhärtungsgeschwindigkeiten in weiten Grenzen, insbesondere bei kleinen Ansatzmengen, einstellen. Hierbei unterscheidet man - wie bei organischen Polymerbetonen - zwischen Topfzeit (Fliessfähigkeit), Grün- und Endfestigkeit. So lassen sich mit den Bestandteilen aus A), B) und C) gefüllte und ungefüllte Formmassen herstellen, die

- Topfzeiten zwischen 5 Sekunden und 60 Minuten, auch bei tiefen Temperaturen besitzen
- Grünfestigkeiten, dh 50 % der möglichen Endfestigkeiten zwischen 5 und 120 Minuten, auch bei tiefen Temperaturen liefern
- Endfestigkeiten ≧ 90 % nach 15 und 240 Minuten Abbindezeit bringen.

Werden als erfindungsgemässe Additive solche aus der Gruppe C) eingesetzt, die beim Kontakt mit Wasser Gase bilden oder sich aufblähen, so lassen sich mit dieser Hilfe interessante und stabile Schaumstrukturen herstellen. Dabei werden solche Additive bevorzugt, die, wie zB das Calciumcarbid, beim Kontakt mit Wasser neben einem Gas vor allem intermediär einen Reaktionsbeschleuniger bilden, der sich anschliessend in die abgebundene Rückgratbindemittel-Matrix integriert.

Die Zusatzmengen der Additive sind abhängig von den Temperatureinsatzbereichen, den Abbindegeschwindigkeiten und den Endfestigkeiten. Sie liegen im allgemeinen zwischen 0,1 und 25 Gew.-%, vorzugsweise zwischen 1 und 20 Gew.-% und insbesondere zwischen 2 und 15 Gew.-% bezogen auf die eingesetzten Rückgratbindemittel.

Neben diesen aus den erfindungsgemässen Additiven bildenden Nebenprodukten "Gase", die als Treib- und Blähmittel wirken, lassen sich aus den erfindungsgemässen Formmassen auch Schaumkörper herstellen. Hierzu können als Schaummittel u.a. folgende Verbindungen eingesetzt werden:
Wasserstoffperoxid, anorganische und organische Perverbindungen, chemische Treibmittel, wie zB Azodicarbonamid, Hydrazin-Derivate, Semicarbazide, Tatrazole, Benzoxazine.

Schäume aus den erfindungsgemäss abbindenden Formmassen lassen sich auch über die Einführung von Gasen, wie zB Luft, Stickstoff, Kohlendioxid während der Topfzeitphase erzeugen. Diese Technik ist besonders dann von Interesse, wenn niedervolumige Formkörper, vor allem solche mit einem Volumen ≦ 100 cm$^3$, herzustellen sind, wie dies insbesondere bei Dübelmassen in der Befestigungstechnik der Fall ist. Dieser Gasstrom kann zusätzlich erwärmt sein, wodurch die Polykondensation und Abbindung beschleunigt wird und/oder die Zusatzmengen an erfindungsgemässen Additiven reduziert werden können.

Des weiteren können den erfindungsgemässen Formmassen Füllstoffe, Pigmente, Farbstoffe, Thixotropiermittel, aber auch andere Additive zur Regulierung der rheologischen Eigenschaften, der Benetzung und dergleichen eingearbeitet werden. Aber auch Zusätze zur Verbesserung der Haftung, wie zB physikalisch und/oder chemisch abbindende Kunstharzdispersionen, wie zB auf der Grundlage von Polyvinylacetat, Acryl- und Methacryl-, Polyesterverbindungen und deren Copolymere sind möglich.

Aus der Klasse der Füllstoffe eignen sich besonders solche auf der Grundlage von Siliziumdioxid, wie zB Quarzmehle und -sande, Aluminiumoxid, wie zB Korundmehle und -granulate. Da diese Füllstoffe einen partiellen amorphen Anteil besitzen können, tragen sie mit zur Verstärkung der abgebundenen Formmassenmatrix bei, wie überraschend gefunden wurde. Zur Verstärkung der Matrix können natürlich auch Fasermaterialien aus organischen Polymeren, wie zB Aramid, Polyethylen, Polypropylen, eingesetzt werden.

Diese erfindungsgemässen Formmassen haben breite Einsatzbereiche, insbesondere im Hoch-, Tief- und Bergbau, sowie im Hand- und Heimwerkerbereich. Die mit Härter hergestellten wasserhaltigen, fliessfähigen und/oder thixotrop eingestellten Pasten aus diesen Rückgratbindemitteln lassen sich wie normale Zementmörtel und Polymerbetone verarbeiten.

Da die Eigenschaften der erfindungsgemässen abbindenden Formmassen in relativ weiten Grenzen variabel einstellbar sind, lassen sich u.a. schnell-, mittel- und langsam abbindende Formulierungen auch für tiefe Temperaturbereiche einstellen. Somit können auf dieser Grundlage Dübelmassen für den Befestigungssektor für den gesamten Bau- und Bergbausektor bereitgestellt werden.

Die Dübelmassen werden insbesondere in Form von Zwei- oder Mehrkammer-Patronen benutzt, wobei das Wasser oder die wässrige Lösung getrennt von den mit Wasser reagierenden Stoffen, bzw den zur Reaktion Wasser benötigenden Stoffen enthalten ist.

Eine weitere Ausführungsform besteht in der Anordnung von Wasser oder wässrigen Lösungen in Mikrokapseln, die in den pulverförmigen, zur Reaktion Wasser benötigenden Stoffen verteilt sind.

Die Verarbeitung dieser erfindungsgemässen Formmassen kann in bekannten handelsüblichen 2-Komponenten-Verarbeitungsvorrichtungen, wie Mischpistolen, Misch- und Dosiervorrichtungen, für Polymerbetone, aber auch in sogenannten 2-Kammer-Systemen erfolgen. Aber auch ein einfaches Zusammenmischen der beiden Komponenten in einem Topf an der Gebrauchsstelle ist möglich, das der heutigen Baupraxis entspricht.

Auf der Grundlage dieser erfindungsgemässen Bindemittelmischungen wird dem Fachmann in Gegenwart von Wasser eine abbindende Dübelmasse auf anorganischer Rückgratbindemittel-Grundlage bereitgestellt, die sich u.a. durch folgende Vorteile und Fortschritte auszeichnet:

- leichte Verarbeitbarkeit
- umwelt- und ökologiefreundlich
- unkritische Mischungsverhältnisse der 2-Komponentensysteme
- einstellbare Topf- und Abbindezeiten
- auch bei Temperaturen unter 0° C verarbeitbar
- schnelles Abbinden bei Temperaturen ≤ 20° C
- unter Wasser abbindend
- nicht brennbar
- ausserordentlich wirtschaftlich im Vergleich zu den Polymerbetonen auf organischer Polymergrundlage

Die Eigenschaften der abgebundenen Massen sind u.a.:

- frühe Grün- und Endfestigkeiten, zB 30 Minuten
- Unbrennbarkeit, dh keine Rauchgasentwicklung
- Beständigkeiten gegenüber Lösemitteln, gegen schwache und starke Alkalien sowie gegen Schwefelsäure
- Oberflächenhärte nach Mohs 3 bis 8 einstellbar
- Raumgewichte bei Kompaktmassen: 1600 - 3500 kg/m$^3$
  bei Schaummasse: 200 - 1000 kg/m$^3$
- Biegefestigkeit: 10 - 40 MPa einstellbar
- Druckfestigkeit: 20 - 100 MPa einstellbar
- E-Modul 10.000 - 50.000 MPa
- lineare Wärmedehnung: 1 bis 8 x 10$^{-6}$/k$^{-1}$
- hohe Schwingungsdämnfung
- Wärmeformbeständigkeit
- Niedrigeres Kriechverhalten im Vergleich zu Polymerbetonen
- Hohe Verbundfestigkeiten
  der Dübelmasse
- hohe Alterungsbeständigkeit

Die Erfindung wird anhand nachstehender Beispiele erläutert, ohne auf diese beschränkt zu sein.

Beispiele:

Zur Herstellung der erfindungsgemässen Formmassen der Beispiele 1 bis 5 wurden folgende Komponenten eingesetzt:

Oxidgemisch (a1)

| Nr. 1: | 39,0 Gew.-% | $SiO_2$ |
|---|---|---|
| | 24,0 Gew.-% | $Al_2O_3$ |
| | 22,0 Gew.-% | $CaO$ |
| | 4,6 Gew.-% | $MgO$ |
| | 0,6 Gew.-% | $SrO$ |
| | 2,5 Gew.-% | $Na_2O$ |
| | 0,5 Gew.-% | $K_2O$ |
| | 5,4 Gew.-% | $Fe_2O_3$ |
| | 1,0 Gew.-% | $TiO_2$ |
| | 0,4 Gew.-% | $SO_3$ |
| Nr. 2 | 40,0 Gew.-% | $SiO_2$ |
| | 60,0 Gew.-% | $Al_2O_3$ |

Aluminiumsilikat (a2)

Metakaolinit ($Al_2O_3$ . 2 $SiO_2$)

Hydraulische Bindemittel (a3)

Portlandzement 45 F

Härterlösung

20,00 Gew.-% $SiO_2$
20,88 Gew.-% $K_2O$
59,12 Gew.-% Wasser

Zur Prüfung der Formmassen wurde ein Beton der Güteklasse C 20 mit $\beta$w 38 N/mm$^2$ und Ankerstangen M 12 / 12.9 unverzinkt verwendet.

Beispiele 1 - 5

Die trockenen Bestandteile aus Oxidgemisch, Aluminiumsilikat, Zementen, Härtungsregulatoren und Füllstoffen wurden in einem Pulvermischaggregat zu einem homogenen Trockengemisch zusammengemischt. Danach wurde in einem Becher die Härterlösung und/oder Wasser vorgelegt und die vorgeschriebene Feststoffmenge aus dem Trockengemisch mittels eines schnelllaufenden Rührers portionsweise eingerührt. Die Ansatzmengen betrugen jeweils 200 g. Der jeweilige homogene Mörtelteig wurde in Bohrlöcher, die zuvor in dem obigen Beton hergestellt wurden und einen Durchmesser von ca. 13,2 mm und eine Bohrlochtiefe von 110 mm besassen, eingegossen und zu etwa 2/3 verfüllt. Anschliessend wurden Ankerstangen der obigen Güteklasse in das jeweilige Mörtelbett eingedrückt.

Die Zusammensetzungen der Formmassen und die ermittelten Kenndaten sind in Tabelle 1 zusammengefasst.

| Tabelle 1 | Ein-heit | Beispiele 1 | 2 | 3 | 4 | 5 |
|---|---|---|---|---|---|---|
| Oxidgemisch (a1) Nr. 1 | Gew. % | 30,0 | —— | 10,3 | 25,0 | 18,0 |
| Nr. 2 | Gew. % | —— | 25,0 | 10,0 | 5,0 | 18,0 |
| Meta-Kaolinat (a2) | Gew. % | 5,0 | 5,0 | 4,0 | 2,5 | 3,7 |
| Portlandzement (a3) | | 38,0 | 41,4 | 10,0 | —— | 5,3 |
| Härter (B) Wasser (b1) | Gew.% | 25,0 | 10,0 | 10,0 | 2,5 | 5,0 |
| Nr. 1 (b2) | Gew. % | —— | 15,0 | 15,0 | 30,0 | 15,0 |
| Härtungsregulatoren (C) Lithiumcarbonat | | 1,2 | 1,0 | 0,1 | —— | —— |
| Calciumoxid | | —— | 2,5 | 5,4 | —— | 5,0 |
| Calciumcarbid | Gew. % | —— | —— | —— | 2,4 | —— |
| Zitronensäure | | 0,9 | 0,1 | 0,2 | 0,8 | 1,8 |
| Füllstoff (D) Quarzsand 0,1 - 0,25 mm | Gew. % | —— | —— | 35,0 | 34,3 | 28,2 |
| Topfzeit / 23 °C | Min. | 6 - 8 | 5 | 5 | 15 | 7 |
| Grünfestigkeit / 23 °C / nach | Min. | 10 | 8 | 5 | 80 | 10 |
| Verbundfestigkeit / 23 °C / nach | Min. | 60 | 50 | 40 | 240 | 50 |
| Grünfestigkeit / + 5 °C / nach | Min. | 25 | 30 | 70 | 160 | 20 |
| Verbundfestigkeit / + 5 °C / nach | Min. | 120 | 120 | 100 | 360 | 110 |
| Auszugswert / M 12- Ankerstange | KN | 28 | 32 | 50 | 45 | 45 |

## Patentansprüche

1. Verwendung einer härtbaren, in Gegenwart von Wasser abbindenden, anorganischen Masse, enthaltend
   A) als anorganische Bindemittel
      a1) feinteiliges $SiO_2$ oder feinteilige Gemische von $SiO_2$ und $Al_2O_3$ und
      a2) Aluminiumsilikate aus der Gruppe der Kaolinite und Metakaolinite,
   B) als Härter in wässriger Form vorliegende, zumindest teilweise wasserlöslichen Alkali- und/oder Ammoniumsilikaten und/oder deren Precursoren aus den entsprechenden Oxiden bzw. Hydroxiden und amorpher Kieselsäure und
   C) als Härtungsbeschleuniger Substanzen aus der Gruppe der Alkali- und/oder Ammoniumcarbonate und/oder anorganische und/oder metallorganische Verbindungen oder Gemische, die beim Kontakt mit Wasser Wärme, insbesondere von $\geq$ 500 joule/g abgeben
   als Dübelmasse zur Befestigung von Ankerstangen in Bohrlöchern.

2. Verwendung einer Masse gemäß Patentanspruch 1 enthaltend als anorganisches Bindemittel ein hydraulisches Bindemittel.

3. Verwendung einer Masse gemäß Patentanspruch 1 oder 2, **gekennzeichnet durch** weitere Zusätze, wie Füllstoffe, Schlackenstoffe, Treibmittel, Pigmente, Farbstoffe, Thixotropiermittel, Mittel zur Regulierung der rehologischen Eigenschaften, Benetzungs- und Haftungsverbessernde Mittel.

4. Verwendung einer Masse gemäß einem der vorhergehenden Patentansprüche, **dadurch gekennzeichnet**, daß aliphatische 2- und/oder mehrbasische organische Carbonsäuren oder deren Salze, insbesondere deren Alkali- und/oder Erdalkalisalze als Rheologieverbessernde Substanzen enthalten sind.

**Claims**

1. Use of hardenable inorganic material which cures in the presence of water, containing:
   (A) as inorganic binders,
      a1) fine-particulate $SiO_2$ or a fine-particulate mixture of $SiO_2$ and $Al_2O_3$ and
      a2) aluminium silicates from the group comprising kaolinites and metakaolinites,
   B) as curing agent, in aqueous form at least partly water-soluble alkali silicates and/or ammonium silicates and/or their precursors from the corresponding oxides or hydroxides and amorphous silicic acid and
   C) as curing accelerators, substances from the group comprising alkali carbonates and/or ammonium carbonates and/or inorganic and/or metallorganic compounds or mixtures which release heat in contact with water, especially an amount $\geq$ 500 joules/g,
   as an anchoring material for fastening anchor rods in bore holes.

2. Use of a material in accordance with claim 1, containing a hydraulic binder as the inorganic binder.

3. Use of a material in accordance with claim 1 or 2, characterised by further additives, such as fillers, slag, blowing agents, pigments, dyestuffs, thixitropy agents, additives to regulate the rheological properties and agents to improve wetting and adhesion.

4. Use of a material in accordance with one of the preceding patent claims, characterised by containing aliphatic, organic, di and/or poly carbonylic acids or their salts, especially their alkali metal salts and/or alkaline earth metal salts, as substances improving the rheology.

**Revendications**

1. Utilisation d'une masse inorganique durcissable et prenant en présence d'eau, contenant
   A) comme liant inorganique
      a1) du $SiO_2$ à grain fin ou des mélanges finement dispersés de $SiO_2$ et de $Al_2O_3$ et
      a2) des silicates d'aluminium du groupe des kaolinites et des métakaolinites,
   B) comme durcisseur, des silicates alcalins et/ou des silicates d'ammonium sous forme aqueuse, au moins partiellement solubles dans l'eau, et/ou leurs précurseurs obtenus à partir des oxydes ou hydroxydes correspondants et de l'acide silicique amorphe, et
   C) comme accélérateur de durcissement, des substances du groupe des carbonates alcalins et/ou des carbonates d'ammonium et/ou des composés ou mélanges inorganiques et/ou organométalliques qui, au contact de l'eau, dégagent de la chaleur, en particulier $\geq$ 500 joules/g,
      comme composition pour la fixation de barres d'ancrage dans des trous de perçage.

2. Utilisation d'une masse selon la revendication 1, comprenant un liant hydraulique comme liant inorganique.

3. Utilisation d'une masse selon l'une des revendications 1 ou 2, caractérisée par la mise en oeuvre d'additifs supplémentaires tels que des charges, des matières de scories, des produits gonflants, des pigments, des colorants, des agents thixotropes, des produits pour la régulation des propriétés rhéologiques, des produits améliorant le mouillage et l'adhésion.

4. Utilisation d'une masse selon l'une des revendications précédentes, caractérisée en ce qu'elle contient comme substances améliorant la rhéologie, des acides carboxyliques organiques aliphatiques bi- et/ou polybasiques ou leurs sels, en particulier leurs sels alcalins et/ou alcalino-terreux.